# FASCICULE DE BREVET EUROPEEN

(11) **EP 0 265 398 B1**
(45) Date de publication et mention de la délivrance du brevet: **25.08.1993**
(21) Numéro de dépôt: 87830373.4
(22) Date de dépôt: 22.10.1987
(51) Int. Cl.: B60F 1/04

(54) **Semi-remorque pouvant circuler sur rails et route**
Sattelanhänger für Schiene und Strasse
Rail-highway semitrailer

(30) Priorité: 23.10.1986 IT 212486
(43) Date de publication de la demande: 27.04.1988
(73) Titulaire: FERROSUD S.p.A., I-75100 Matera (IT)
(72) Inventeur: Mangone, Angelo, I-75100 Matera (IT)
(74) Mandataire: Russo, Saverio, Dott. Ing.

(56) Documents cités:
- EP-A- 0 138 450
- DE-C- 961 714
- US-A- 2 513 552

## Description

Cette invention a pour objet un véhicule ferroviaire qui peut, en cas de besoin, circuler sur route comme n'importe quel semiremorque.

Il s'agit, plus exactement, d' un semi-remorque ferroviaire transformable en semi-remorque routier, qui, vice versa, peut se transformer en semi-remorque ferroviaire.

L'idée de pouvoir disposer de véhicules capables de circuler aussi bien sur route que sur rails n'est pas une idée nouvelle.

Aux Etats-Unis, des projets de ce type ont été tentés dans les années 50.

A la fin des années 70, furent réalisés des wagons pourvus d'un seul essieu ferroviaire rétractable monté à une extrémité du wagon, permettant ainsi de remplacer les roues par des roues avec pneus.

Ce système n'était pas réalisable en Europe car le poids maximum autorisé sur un seul essieu ferroviaire est de 20 tonnes ou 22,5 tonnes (aux Etats-Unis le poids maximum peut atteindre 27 tonnes et même 30 tonnes par essieu).

En effet, les remorques circulant sur route peuvent atteindre dans certains pays européens, et en particulier en Italie, 36 + 5% tonnes de poids total au sol, distribuées sur les roues antérieures et postérieures, c'est pourquoi ce système ne pourrait pas fonctionner comme un semi-remorque ferroviaire, pourvu d'un seul essieu ferroviaire, à moins qu'on n'apporte d'importantes limitations au chargement pendant le service ferroviaire.

D'autre part, l'augmentation de poids que comportait l'application de l'essieu ferroviaire rétractable, provoquait une diminution de la charge utile du semi-remorque sur route. De toute façon, l'idée du véhicule bivalent route/rails demeura et, récemment, on a réalisé un autre véhicule capable de voyager aussi bien sur route que sur rails, dans lequel le véhicule ne transporte pas, quand il voyage sur route, les essieux ferroviaires et les roues correspondantes, mais est posé sur des boggies ferroviaires de modèle standard seulement au moment de l'utilisation sur rails: le boggie routier reste relié au véhicule après que les roues aient été élevées à une hauteur appropriée sur les rails par un dispositif adapté.

Toutefois, ces véhicules présentent des inconvénients dus au fait qu'avec les normes routières de certains pays européens, et ici nous parlons surtout de l'Italie où un semi-remorque routier peut atteindre le poids de 38 tonnes environ, le semiremorque pourrait voyager sur rails, avec un boggie standard renforcé, seulement à la vitesse maximum de 90 Km/h, puisque 38 tonnes plus environ 5 tonnes, poids du boggie routier, font 43 tonnes, c'est à dire 21,5 tonnes par essieu de boggie ferroviaire, et ce poids n'est pas admis sur toutes les lignes européennes.

En d'autres termes, en Italie et dans certains pays européens, chaque fois que les semi-remorques peuvent voyager sur les routes avec un poids total supérieur à 35 tonnes, non seulement leur transformation en vehicule pouvant voyager sur rails à une vitesse supérieure à 90 Km/h en utilisant des boggies standard n'est pas possible, mais en plus il est nécéssaire d'utiliser des boggies renforcés pesant plus lourd.

En outre, les semi-remorques route/rails avec boggie ferroviaire escamotable réalisés actuellement, présentent d'autres inconvénients.

L'accrochage actuellement utilisé entre ces véhicules quand ils voyagent sur des rails avec un seul boggie en guise de semiremorques ferroviaires est en effet de type rigide à insertion horizontale et donc, pour effectuer l'accrochage il faut coordonner la position à l'horizontale et à la verticale de l'anneau dans lequel pénètre le pivot de verrouillage; ceci implique le règlement de la hauteur des pattes d'appui pendant les manoeuvres et l'emploi d'un opérateur pour insérer le pivot de verrouillage au cas où celui-ci ne s'effectue pas automatiquement.

En outre, le verrouillage de la broche de couplage du semi-remorque, avec la crapaudine du boggie, est effectué avec un pivot et une plaque qui doivent être appliqués par le bas en obligeant l'opérateur à effectuer une manoeuvre difficile et fatigante ou même pour éviter cela, à la construction d'une fosse entre les rails où l'opérateur pourrait travailler plus facilement.

L'assemblage pneumatique du cylindre du frein avec le distributeur d'air comprimé, ou plus généralement avec le reste de l'installation, est effectué à la main et donc, au cas où le couplage ne soit pas effectué, à cause d'une erreur ou d'un oubli, il serait impossible de freiner le boggie.

Il y a encore d'autres inconvénients, qui résident dans le fait que l'alignement du semi-remorque sur l'axe des rails peut être effectué seulement avec un tracteur, obligeant ainsi le conducteur du tracteur à effectuer des manoeuvres plus difficiles.

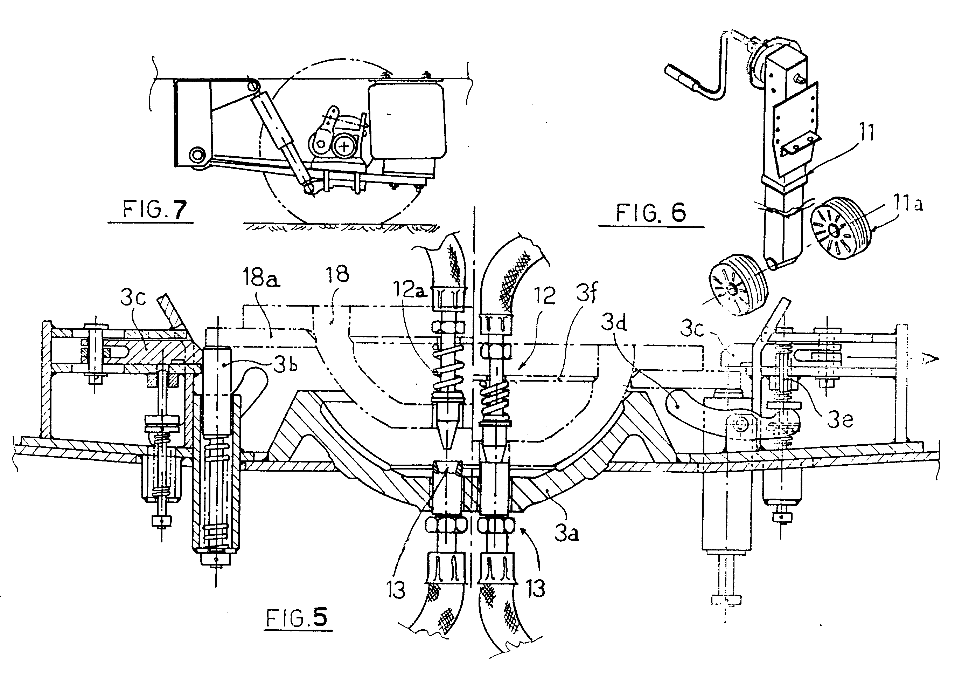

Le document EP-A2-0 138 450 décrit un wagon ferroviare 1 auquel peut être appliqué postérieurement un boggie routier, pour en permettre le transport sur route avec un tracteur routier, et un container 22 pouvant circuler sur rails et sur route, selon les figures 7 à 10, le container étant muni aussi bien de moyens pour l'accrochage à un tracteur routier (21) et postérieurement à un boggie routier amovible (17), tels que le pivot 14 d'une crapaudine pour permettre le transport sur route, que de moyens pour l'application d'un boggie ferroviaire amovible 23 à appliquer en même temps à deux containers pour permettre leur transport sur rails.

Les containers 22 reposent au niveau du sol, comme le montre la fig. 7 du document cité; ils présentent ainsi, aux deux extrémités, des cavités 15 situées sous la charpente de soutien et le pivot 14 permettant d'introduire le boggie 19 à l'une des extrémités et un tracteur 21 à l'autre (fig. 8).

Le boggie routier 17 ne peut être accroché qu'à l'extrémité du container de façon à ce que les efforts de traction et de compression soient absorbés par le pivot 14 du container 22.

Dans le cas en question, il s'agit de containers qui doivent voyager principalement sur rails à basse vitesse: voyager sur route pourrait, du fait du bas niveau de la partie centrale de chaque container, causer facilement le frottement contre des obstacles au sol, surtout en cas de vallonnements, de dos d'âne, de cassis, de trous, etc..

Autrement dit, dans le document susdit, on décrit des moyens pour déplacer aussi bien sur route que sur rails des containers spéciaux pour des transports de courte distance, par exemple de la gare au lieu de déchargement, et non pas de véritables semi-remorques en mesure de rouler aux vitesses maximales autorisées sur les grandes voies de communications.

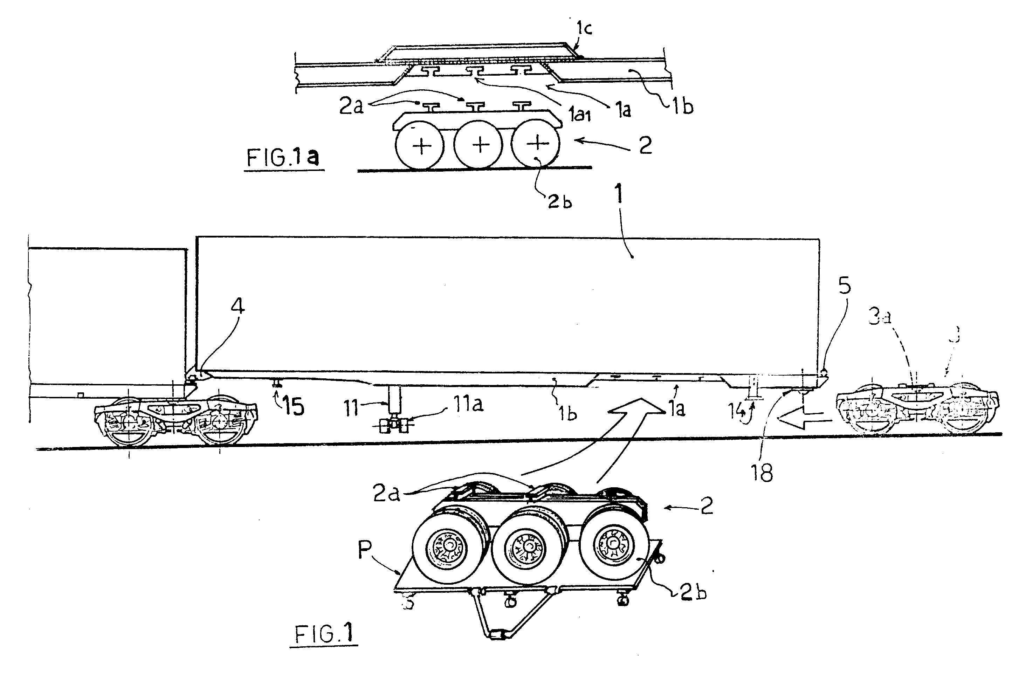

Sur le wagon ferroviaire 10 on peut fixer des boggies routiers qui permettent la circulation sur route: dans ce cas, (voir figures 1,2,3,4,5,6,19,20,21), le véhicule circule sur la route sans que l'on décroche les essieux et les roues ferroviaires puisqu'ils ne sont pas amovibles.

Quoi qu'il en soit, ce document ne décrit ni ne revendique l'invention de semi-remorques ferroviaires transformables en semi-remorques routiers et vice-versa; il concerne plutôt des véhicules ferroviaires munis d'au moins deux essieux ferroviaires inamovibles ainsi que des containers spéciaux présentant aux deux extrémités des cavités 15 dans lesquelles peuvent être introduits des boggies routiers ou ferroviaires. En définitive, le système intermodal décrit dans le document fait référence à trois types de transport:
a) transport sur route d'un container spécial avec un boggie routier et un tracteur 21: le boggie routier est relié par un pivot 14 et donc il faut d'autres dispositifs pour éviter qu'il ne pivote autour de l'axe passant par le pivot en question;
b) transport sur rails de trains de containers mentionnés au point a) au moyen de boggies 23 pourvus de deux crapaudines 20 permettant l'assemblage des extrémités des deux remorques suivantes: l'assemblage n'est pas effectué entre les châssis des containers, et ces mêmes châssis ne sont pas non plus munis de repoussoirs, ni d'autres dispositifs qui empêcheraient l'amortissement des chocs et des autres sollecitations de la part du pivot;
c) transport sur route au moyen d'un tracteur 21, d'un wagon ferroviaire spécial 10, sans détacher les roues et les essieux ferroviaires.

Donc, soit les wagons ferroviaires 10, soit les containers 22 décrits dans ce document ne représentent pas un véritable système intermodal.

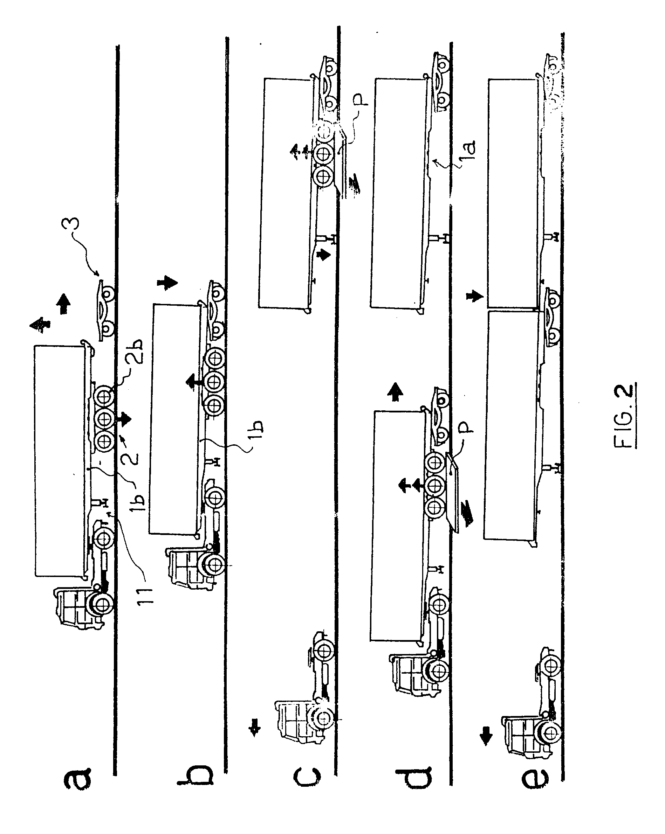

Le wagon 10 peut rouler sur chemin de fer comme un wagon ferroviaire normal mais il ne peut être transformé en un semi-remorque routier normal car ses essieux ne sont pas détachables: le wagon 10 de la fig. 19, différent du wagon 10 des fig. 1 et 2, doit lui aussi rouler sur route avec les essieux ferroviaires.

Les containers 22 ne peuvent être transformés ni en vrais wagons ferroviaires ni en vrais semi-remorques routiers.

Le but général de cette invention est d'éliminer les inconvénients, mentionnés ci-dessus, du transport bimodal.

Un des buts principaux est de créer un unique semi-remorque qui puisse rouler sur rails comme un véhicule ferroviaire et sur route comme un véritable semi-remorque, pour lequel il soit possible de diminuer aussi bien la tare routière que la tare ferroviaire, si nécessaire, en remplaçant selon les besoins, le boggie ferroviaire par le boggie routier ou vice versa en remplaçant le boggie routier par le boggie ferroviaire, de manière à ce qu'on puisse voyager sur route uniquement avec le boggie routier et, vice versa, sur rails uniquement avec le boggie ferroviaire.

Autre but important: proposer un crochet entre les semi-remorques permettant la formation de convois ferroviaires au fonctionnement plus rapide et plus sûr.

Dans ces buts, l'invention a résolu un premier problème avec la fourniture d'un semi-remorque dans lequel le boggie routier est amovible, c,està-dire qu'il est pourvu d'un châssis indépendant qui incorpore des suspensions fluodynamiques, qui permettent le soulèvement du châssis du semi-remorque quand on doit appliquer le boggie ferroviaire, et également des moyens mécaniques ou fluodynamiques qui permettent le soulèvement de ses roues au-dessus des rails, pour extraire le boggie routier après l'application du boggie ferroviaire.

Un autre problème a été résolu par cette invention: il s'agit de la présence d' un système d'accrochage entre les semiremorques ferroviaires qui simplifie la manoeuvre de formation du convoi ferroviaire effectuée par le tracteur routier, doté également de frotteurs qui empêchent les mouvements de roulis du semiremorque autour de son axe longitudinal.

Le semi-remorque de cette invention est décrit en détail cidessous, avec référence aux figures des cinq tables de dessins ci-jointes qui illustrent respectivement:
la fig.1, le semi-remorque selon l'invention avec le boggie ferroviaire en position de pré-montage et le boggie routier extrait;
la fig.1a, une exécution possible du système de montage du boggie routier;
la fig.2, les manoeuvres pour le changement d'état route/rails et pour l'accrochage réciproque entre les semiremorque avec substitution des boggies;
la fig.3, le dispositif d' accrochage élastique entre les semi-remorques;
la fig.4, le dispositif qui bloque le système d'accrochage des semi-remorques;
la fig.5, les détails de la crapaudine et de la broche de couplage pour l'assemblage du boggie ferroviaire;
la fig.6, la patte d'appui avec roulettes transversales;
la fig.7, un exemple de suspension pneumatique de série appliquée au boggie routier.

Conformément à cette invention, dans un exemple d'exécution de l'invention, voir fig.1, le semi-remorque 1 a un boggie routier 2 amovible, à trois essieux, placé dans la zone 1a.

Comme nous l'avons illustré sur la fig. 1a le couplage du boggie avec le semi-remorque est effectué latéralement par des profilés en T 2a montés transversalement par rapport au boggie sur un des côtés du semi-remorque: pour cela on peut recourir à un plateau coulissant P ou à un autre moyen adapté monté sur le boggie.

Le montage latéral du boggie simplifie aussi bien la formation du convoi ferroviaire que la reconstitution des semi-remorques routiers.

Les canaux 1a/1 dans lesquels sont insérés les profilés en T 2a du boggie 2 sont obtenus dans un montage sur châssis solidaire du châssis 15 du semi-remorque: avec 1c ont été indiquées des platines de renforcement latérales.

Le semi-remorque 1 a en outre, près de l'extrémité postérieure, une broche de couplage 18 solidaire de son châssis, pour l'assemblage avec la crapaudine 3a du boggie ferroviaire 3.

Sur la fig. 2, phase a, b, c, d, e sont illustrées les manoeuvres nécéssaires pour la substitution du boggie routier par le boggie ferroviaire quand on veut passer de l'état route à l'état rails.

Dans la phase a, le plan de charge 1b du semi-remorque est soulevé en utilisant la suspension pneumatique des roues 2b du boggie routier pour porter la broche de couplage 18 appliquée au semi-remorque au dessus de la crapaudine 3a du boggie ferroviaire 3;
dans la phase b le plan de charge 1b est abaissé en agissant toujours sur les suspensions des roues du boggie routier pour réaliser l'accouplement matériel du boggie ferroviaire en insérant la broche de couplage 18 dans la crapaudine 3a du boggie ferroviaire;
dans la phase c, les roues du boggie routier sont soulevées avec des moyens appropriés montés entre les essieux des roues 2b et le châssis du boggie 2, ou avec d'autres moyens externes, de manière à permettre l'introduction du plateau coulisant P, et ensuite à pouvoir extraire le boggie, au cas où les moyens de soulèvement des roues ne soient pas combinés avec des rouages,roullements ou autres dispositifs consentant les mouvements transversaux du boggie par rapport à l'axe longitudinal du semi-remorque;
dans les phases d et e se répètent les manoeuvres pour l'accrochage d'un second semi-remorque routier au convoi ferroviaire.

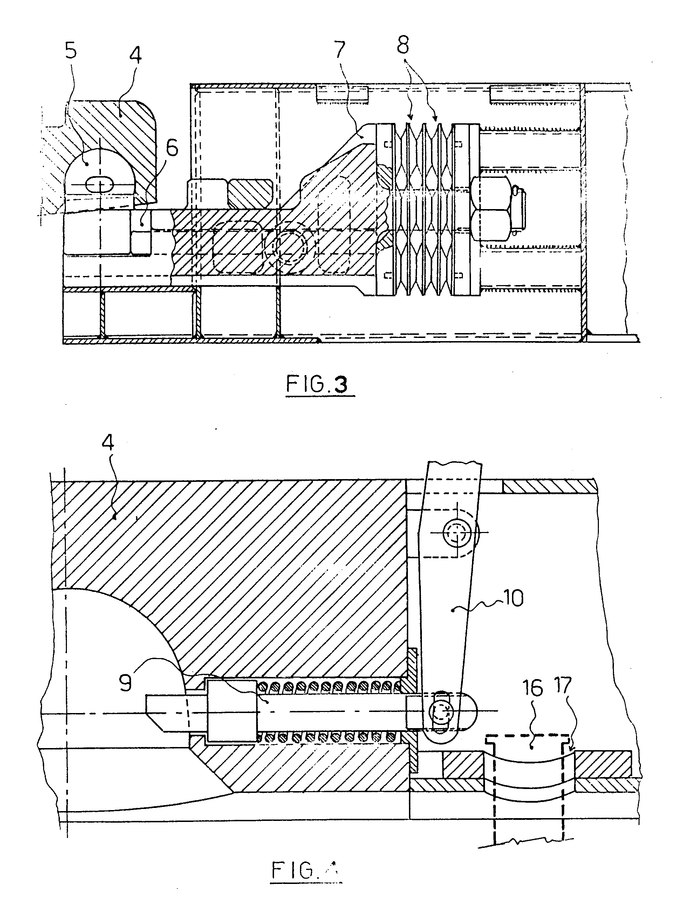

L'accrochage entre les semi-remorques sur rails est effectué avec un dispositif illustré sur la fig.3a.

Ce dispositif est constitué de deux corps qui ont une surface sphérique, l'un est cave et l'autre est plein (sphère) 5, respectivement placés dans l'extrémité antérieure et postérieure de chaque véhicule.

La sphère 5 est montée sur une glissière 6 coulissant dans un guide 7, réactionnée par un moyen élastique en caoutchouc. Un mandrin de blocage 9 grâce au levier 10 assure le blocage réciproque de la sphère 5 avec la demi-sphère concave de manière à permettre une rotation relative autour d'un axe normal à la surface des rails, pour permettre d'accomplir des virages même avec un rayon de courbure de 90 ou 75 m.

L'accrochage se fait en plaçant la demi-sphère concave sur la sphère qui est dons soumise à des efforts de compression et de traction.

La surface extérieure de la sphère est caractérisée par une forme sphérique étendue pour +/- 105°, à partir de la verticale, sur le plan longitiudinal et pour environ +/-80° sur le plan transversal du véhicule.

L'emploi de ce corps sphérique 5 est justifié par la nécéssité de permettre des rotations simultanées autour de deus axes entre eux ortogonaux avec des résultants des forces de fermeture de l'assemblage inclinées, par rapport à la verticale, de +/80° au maximum dans le plan longitudinal (effort vertical de 20 tonnes et effort horizontal de 100÷120 tonnes) et de +/20° dans le plan transversal (effort vertical de 20 tonnes et effort horizontal de 10 tonnes pour équilibrer la force centrifuge dans les virages).

L'accouplement de la crapaudine 3a du boggie à la broche de couplage 18 appliquée en dessous en direction de l'extrémité postérieure du plan de charge du semi-remorque, est illustrée sur la fig.5.

Le blocage de la broche de couplage 18 appliquée à l'extrémité du semi-remorque, à la crapaudine 3a du boggie 3 est effectué par le biais d'un dispositif automatique formé d'un petit piston 3b qui quand il est pressé par la plaque 18a de la broche de couplage libère le pivot 3c qui se déplace de manière élastique en bloquant la plaque 18a.

La plaque 18 a, en appuyant sur la manette 3d pousse donc le goujon contre le pivot 3c de manière à ce qu'en le tirant dans le sens de la flèche il puisse le bloquer dans la position de verrouillage de la broche de couplage.

Les pattes d'appui 11, à leur tour, son caractérisées par des roulettes 11a utilisées pour l'appui au sol, montées sur un axe parallèle à l'axe longitudinal du semi-remorque de manière à permettre d'éventuels déplacements transversaux de l'extrémité du semi-remorque opposée à l'extrémité posée sur le boggie ferroviaire, pour aligner celui-ci sur l'axe longitudinal intermédiaire des rails.

L'invention prévoit également le raccordement automatique entre le circuit freinant du boggie et le circuit freinant du semiremorque.

Dans une variante, le boggie 2 peut être muni de moyens qui permettent de le détacher de l'arrière du semi-remorque, en le faisant glisser longitudinalement; dans ce cas le soulèvement du semi-remorque doit être effectué avec des moyens n'appartenant pas au boggie routier.

Sur la fig. 5, est illustré également un exemple d'exécution du dispositif qui relie les tuyauteries de l'air comprimé du circuit freinant du semi-remorque aux tuyauteries qui alimentent le dispositif freinant du boggie ferroviaire.

Ce dispositif est formé d'insertions coniques 12 réactionnées par des ressorts, montés sur la broche de couplage, qui, lorqu'ils sont en contact avec les tubulures coniques 13 montées sur la crapaudine, pénètrent dedans, établissant ainsi un couplage pneumatique; dans ce but, les ressorts 12 des insertions coniques montés sur la broche de couplage sont réactionnés par un plateau 3f solidaire de la broche de couplage.

Les martinets 14 de soulèvement pour permettre le détachement du boggie routier par l'arrière, si celui-ci est muni des moyens nécéssaires, peuvent être également incorporés au boggie: dans ce cas ils doivent être montés sur les côtés de la partie postérieure ou à proximité des extrémités postérieures des parois latérales, et ils sont de type téléscopique (voir fig.1).

Pour les manoeuvres de substitution des boggies, après avoir aligné le semi-remorque sur les rails, il suffit de le soulever avec les martinets 14, d'extraire le boggie routier par l'arrière et d'enfiler le boggie ferroviaire.

Le montage sur la crapaudine du tracteur routier est effectué avec le pivot 15; les moyens mécaniques de montage du boggie routier peuvent être de n'importe quel type, pourvu qu'ils puissent permettre l'extraction du boggie.

## Revendications

1. "Semi-remorque (1) pouvant circuler sur rails et sur route", le véhicule étant muni aussi bien de mécanismes (5) pour l'accrochage automatique aux extrémités arrière du châssis d'un autre semi-remorque (1) de même type pour former un convoi de semiremorques ferroviaires, que de mécanismes d'accrochage à un tracteur routier, tels que le pivot (15) d'une crapaudine, pour fonctionner en tant que semi-remorque routier, ainsi que de mécanismes en vue de l'application et la rapide extraction d'un boggie ferroviaire amovible, (3) comme un broche de couplage (18), caractérisé par:
a) des mécanismes permettant, lorsqu'il est prévu que le semi-remorque (1) circule sur rails, d'extraire ou de démonter, du châssis du plateau (1b) du semiremorque même, un boggie routier amovible (2), à cet effet muni par exemple, de profilés transversaux (2a) ayant une coupe en T qui doivent être insérés dans des cannelures (1a1) (ayant elles aussi des coupes en T), de poutres (1a) solidaires du plateau (1) du semi-remorque (1) lui-même, ou muni d'autres moyens d'assemblage adaptés, entre le châssis du plateau (1b) et le boggie même (2), tels que des pivots, crochets etc;
b) des mécanismes de suspension élastiques du boggie routier (2) assortis à des dispositifs fluodynamiques reliés aux roues pour permettre le soulèvement et l'abaissement du plateau du semiremorque, alimentés par les circuits fluodinamiques du semiremorque même, lorsqu'on doit monter le boggie ferroviaire (3) ou pour effectuer le déplacement vertical des dispositifs d'accouplement (2a) par rapport aux cannelures (1a₁) du châssis du semiremorque, pour permettre leur introduction sur l'un des deux côtés du semiremorque, lorsque le châssis s'appuie sur le boggie ferroviaire (3).
c) des mécanismes adéquats du boggie routier pour soulever ses roues au-dessus des rails quand le châssis du semi-remorque est posé sur le boggie ferroviaire.

2. Semi-remorque selon la revendication 1, caractérisé par le fait que les dispositifs permettant l'introduction du boggie ferroviaire et du boggie routier sont indépendants et que le soulèvement du plateau lors de l'introduction du boggie ferroviaire est effectué à l'aide des suspensions du boggie routier.

3. Semi-remorque selon les revendications précédentes, caractérisé par le fait que l'accrochage est effectué entre les semiremorques à l'aide d'un dispositif formé de deux corps, le premier (4) étant un corps creux avec surface interne de forme sphérique et étant positionné sur le côté avant et le second (5) étant un corps sphérique positionné sur le côté arrière de chaque véhicule, le corps sphérique (5) étant soutenu par une barre (7) réactionnée longitudinalement par un dispositif élastique (8) glissant dans un guide (7), la sphère étant bloquée dans la cavité sphérique du corps (4) à l'aide d'un mandrin de blocage (9) manoeuvré par un levier (10), l'accrochement entre la sphère creuse et la sphère pleine étant réalisé par le haut grâce à l'appui de le corps creux (4) sur la sphère (5).

4. Semi-remorque selon la revendication 1, caractérisé par des moyens tels que par exemple des martinets (14) pour permettre le soulèvement automatique par des dispositifs fluodynamiques ou même à la main de son plateau de chargement et son maintien dans cette position lorsqu'on veut attacher on détacher le boggie routier et, en même temps, détacher ou attacher le boggie ferroviaire, les martinets étant montés en couple sur les côtés postérieurs et éventuellement aussi sur les côtés avant, si l'on veut appliquer le boggie routier de la partie avant et le boggie ferroviaire à partir de l'arrière du semi-remorque.

5. Semi-remorque selon les revendications précédentes, caractérisé par le fait que l'accouplement de la broche de couplage (18) à la crapaudine (3a) du boggie ferroviaire se fait automatiquement en exploitant la pression de la broche de couplage sur la craupadine, le blocage réciproque de la broche de couplage à la crapaudine étant obtenu grâce à un goujon en butée contre une plaque (18a) de la broche de couplage, le goujon (3c) maintenu en position de déblocage vis-à-vis du piston (3b) jusqu'au moment où, du fait de la pression de la plaque (18a) de la broche de couplage, le piston (3b) en s'abaissant, lui permet de se déplacer audessus de la plaque (18a) grâce à un dispositif élastique, une manette (3d), actionnée par la plaque (18a) susmentionnée de la broche de couplage ce qui provoque le déplacement d'un dispositif (3e) qui bloque le goujon (3c) en position d'arrêt lorsqu'il est déplacé dans le sens de la flèche au moyen d'un levier, pour extraire la broche de couplage.

6. Semi-remorque selon les revendications précédentes, es, caractérisé par le fait que sont associés à la broche de couplage et à la crapaudine du boggie ferroviaire des mécanismes qui permettent l'accouplement entre les circuits fluodynamiques des freins du semi-remorque et l'installation de freinage du boggie; ces mécanismes consistent, par exemple, en enclenchements tronco/coniques (12) qui s'enfilent dans les tubulures coniques (13) lorsque la broche de couplage entre en contact avec la surface interne de la crapaudine.

## Claims

1. "Rail-highway semitrailer", the vehicule being provided with device (5) for the automatic coupling to the back rear end of the chassis of another semitrailer (1) of the same type to form a train of semitrailers, as well as of coupling devices to a road tractor, as the pin (15) of a fifth wheel, to work as a road semitrailer as well as devices for the coupling and the quick uncoupling of a railway bogie, as a coupling pin, characterized by:
a) devices that allow, when semitrailer (1) travels on rails, to extract from bottom's chassis (1b) of the semitrailer, a road bogie (2), at this effect, for example, provided with tee (2a) that are normal to the longitudinal axis of the bogie which have to be inserted in grooves (1A1) having T shape in the beams (1A) of the chassis of the semitrailer (1) itself, or provided with other means for assembling between the chassis (1b) of the bottom and the bogie (2), as pivots, hooks, ecc.
b) devices of elastic suspensions of road bogie assorted to fluodynamic devices connected to the wheels allowing the lifting and lowering of the semitrailer's bottom, feeded by fluodynamic circuits of the same semitrailer, when one has to assemble the railway bogie (3) or effect the vertical displacement of coupling devices (2a) in relation to the grooves (1A1) of the semitrailer's chassis, to allow their introduction on one of the two sides of the semitrailer, when the chassis lays on the railway bogie (3).
c) suitable devices of road bogies to lift its wheels on the rails when the chassis of the semitrailer is placed on the railway bogie.

2. Rail-highway semitrailer as per claim 1, characterized by the fact that devices allowing the introduction of railway bogie and road bogie are independent and that the lifting of the bottom when the introduction of railway bogie is effected with the aid of road bogie's suspensions.

3. Rail-highway semitrailer as per previous claims, characterized by the fact that the coupling between two semitrailers is effected with the aid of a device formed by two devices, the first (4) being an empty body with inside surface of spherical shape and being placed on the front side and the second (5) being a spherical body placed on the rear side of each vehicule, the spherical body (5) being supported by a bar (6) longitudinally reactionary by a resilient device (8) sliding in the guide (7), the sphere being blocked in the spherical cavity of the empty body (4) with the aid of a blocking mandrel (9) manoeuvred by a lever (10), the coupling between the empty body (4) and the solid sphere(5) being realized by the leaning of the empty body (4) on the sphere (5) itself.

4. Rail-highway semitrailer as per claim 1, characterized by means as, jacks (14) allowing the automatic lifting by fluodynamic devices or manually of its charging bottom and its maintenance in this position when one wants to attach or detach the road bogie and, at the same time, detach or attach the railway bogie, the jacks being placed in couples on the rear sides, and if that be the case, also on the front side, if one wants to applicate the road bogie from the front part and the railway bogie on the rear of the semitrailer.

5. Rail-highway semitrailer as per previous claims, characterized by the fact that the coupling of the coupling pin (18) to the fifth wheel (3a) of the railway bogie is automatically made using the pression of the coupling pin on the fifth wheel, the reciprocal connection of the coupling pin to the fifth wheel being obtained by a pin leaning against a plate (18a) of the coupling pin, the pin (3c) being maintained in release position, face to face to the piston (3b), until when, from the fact of plate's pression (18a) of coupling pin, the piston (3b) lowering, allows itself to move on the top of the plate (18a) by an elastic device,a lever (3d) activated by the above mentioned plate (18a) of the coupling pin causing the movement of a device (3e) which jams the pin (3c) in a firm position when it's moved in the direction of the arrow by means of a lever, to uncouple the coupling pin.

6. Rail-highway semitrailer as per previous claims, characterized by the fact that devices allowing the coupling between the fluodynamic circuits of semitrailer's brakes and the device of bogie braking, are associated to the coupling pin and to the fifth wheel of the railway bogie, these devices consist, for instance, of trunk/conical connections (12) inserting in conical pipings (13), when the coupling pin contacts the inside surface of the fifth wheel.

## Patentansprüche

1. "Sattelanhänger fur Schiene und Strasse" wobei das Fahrzeug eine automatische Vorrichtung (5) besitzt an den hinteren Enden des Gerüsts eines anderen gleichen Sattelanhängers anzukuppeln, um einen Zug aus Sattelanhanger bestehend um auf Schienen fahren zusammenzusetzen und wobei es auch Verbindungsvorrichtungen hat wie einen Drehzapfen (15), einem Drehschemel eines Schleppers für Strassenfahrt anzukupplen um es als Strassen Sattelanhänger zu fahren, und wobei es auch andere Mittel für die Ankupplung und die schnelle Auskupplung eines absetzbarem Schienendrehgestells 3 besitzt, wie einen Gegendrehschemel (18) dadurch gekennzeichnet aus:
a) Mittel die ermöglichen, wenn der Sattelanhänger auf Schienen fährt, das Herausziehen des Strassendrehgestell (2) vom Gerüst (1b) des Sattelanhängers, diese Mittel bestehend aus T-Profile (2A) normal seinem longitudinal Achse, die in Ausholungen (1a1) in den Balken (1a) des Gerüsts mit gleiche T-Profile hineingesteckt werden können, oder aus anderen Kupplungen zwischen dem Gerüst (1b) und dem selben Strassendrehgestell (2) wie z.B. Zapfen, Haken;
b) Mittel für eine elastische Fluodynamische Aufhängung des Strassendrehgestells (2), an den Rädern verbunden um das Aufheben und Niederlassen des Sattelanhängers zu ermöglichen, der fluodynamischen Anlage des Sattelanhängers verbunden, um das Schienendrehegestell (3) anzukuppeln oder, senkrechte, die Ankupplungs vorrichtung des Strassendrehgestells am Sattelanhänger zu heben, nämlich der T profile (2a) um in den Ausholungen (1a1) in dem Gerüst des Sattelanhängers hineinzustecken um die Kupplung des Strassendrehgestells von einer der zwei Seiten des Sattelanhängers zu ermöglichen wenn der Sattelanhänger auf dem Schienendrehgestell sich stützt.
c) Vorrichtungen an dem Strassendrehgestell angebaut sind damit die Räder hochgehoben werden können wenn das Gerüst des Sattelanhängers auf dem Schienendrehgestell aufgelegt ist, und das Strassendrehgestell nicht von dem Sattelanhänger ausgezogen wird.

2. Sattelanhänger nach Patentanspruch 1 dadurch gekennzeichnet dass die Mittel für die Einsetzung des Schienendrehgestells und des Strassendrehgestells unabhängig sind und dass die Hochhebung des Gerüsts zur Einsetzung des Schienendrehgestells durch die Aufhängungen des Strassendrehgestells durchgeführt wird.

3. Sattelanhänger wie in Obengenamten Patentansprüchen, dadurch gekennzeichnet dass die Kupplung zwischen zwei Sattelanhängern, durch eine Anlage aus zwei Teilen bestehend durchgeführt ist, das Erste (4) ein halbförmigkörper mit einem Halbkugelförmigen Leerinnenraum versehen, auf der vorderen Seite des Sattelanhängers aufgelegt, das Andere (5) mit einer Vollkugelförmigen an einem Halbbalken festgelegt das, langsrichtung durch ein elastisches Mittel (8) das in einer Geradführung (7) läuft, reaktioniert ist, die Kugel in dem Leerkugelformigen Innenraum des Körpers (4) blockiert ist mittels einem Sicherheitsstecker (9), durch einem Hebel (10) in Funktion gesetzt wird, die Verbindung zwischen den Sattelanhängern mittels Anlegung des Kugelförmigen Leerinnenraums (4) auf die Kugel (5) durchgeführt seiend.

4. Sattelanhänger nach Patentanspruch 1, gekennzeichnet durch Anlagen wie z.B. Wagenheber für die automatische Hebung durch fluodynamische Mittel oder Handgetriebene des Gerüsts des Sattelanhängers und die Festlegung in dieser Position wenn man das Strassendrehgestell anhängen oder abhängen und zur gleichen Zeit das Schienendrehgestell anhängen oder abhängen durch fuhren mochte, die Wagenheber an den hinteren und eventuell auch an den vorderen Seiten eingebaut seiend, wenn man das Strassendrehgestell von der vorderen Seite und das Schienendrehgestell von der hinteren Seite des Sattelanhängers anhängen möchte.

5. Sattelanhänger nach Patentanspruch 1, dadurch gekennzeichnet dass die Ankupplung des Gegendrehschemels (18) zum entsprechenden Drehschemel (3a) des Schienendrehgestells automatisch durch einen Druck des Gegendrehschemels auf den entsprechenden Drehschemel hervorgeht, ihre gegenseitige Kupplung, durch Zapfen (3c) die die Platte (18a) des Gegendrehschemels blockieren durchgeführt seiend, die Zapfen immer in Entblockungsposition gehalten seiend mit Hilfe eines kleinen Kolbens (3b) bis die Platte (18a) der entsprechenden Gegendrehschemel den Kolben (3b) hinunterschiebt und ein elastisches Mittel die Verschiebung der Zapfen (3c) auf die Platte (18a) ermöglicht, ein kleiner Hebel (3d) von der obengenannten Platte (18a) versetzt, die Verschiebung einer Vorrichtung (3e) verursacht wenn die Zapfen (3c) sich in Richtung Pfeil versetzt durch ein Hebelwerk um die Gegendrehschemel herauszuheben.

6. Sattelanhänger nach den obengenannten Patentanschriften, dadurch gekennzeichnet dass der Drehschemel und der Gegendrehschemel des Schienendrehgestells, mit Vorrichtungen die erlauben die Verbindung zwischen die fluodynamische Kreise des Sattelanhängers und das Bremssystem des Drehgestells versehen sind, diese Mittel aus Kegelkupplungen (12) die in die Einlassstützen (13) eingesetzt werden, sobald des Gegendrehschemel die innere Oberfläche des Drehschemels berührt.
